# EUROPEAN PATENT SPECIFICATION

(11) **EP 0 241 293 B1**
(45) Date of publication and mention of the grant of the patent: **09.06.1993**
(21) Application number: 87303106.6
(22) Date of filing: 09.04.1987
(51) Int. Cl.: A23L 1/187, A23C 9/154, A23L 1/05

(54) **Dry food composition**
Trockene Nahrungsmittelzusammensetzung
Composition alimentaire sèche

(30) Priority: 11.04.1986 GB 8608837
(43) Date of publication of application: 14.10.1987
(73) Proprietor: CPC INTERNATIONAL INC., Englewood Cliffs New Jersey 07632-9976 (US)
(72) Inventor: Heine, Ute, D-7102 Weinsberg (DE); Müller, Andrea, D-7100 Heilbronn-Horkheim (DE)
(74) Representative: Wilkinson, Stephen John

(56) References cited:
- EP-A- 0 018 153
- EP-A- 0 037 300
- DE-A- 3 123 972
- GB-A- 812 363
- US-A- 2 784 099
- US-A- 3 619 209
- US-A- 4 081 566

## Description

The present invention relates to a dry food composition, particularly to a dry food composition adapted to be reconstituted with milk to form a pudding.

The classical milk based starch pudding or custard comprises a mixture of a sweetening agent, e.g. sucrose, and a natural starch thickener. Similarly, the classical milk based flan pudding comprises a mixture of a sweetening agent e.g. sucrose and a natural gelling agent such as the seaweed gum carrageenan. Combinations of both these systems are also known.

In use, the pudding mixture can first be blended with a small amount of cold milk or water to form a paste, boiling milk is then added to the paste with stirring and the mixture reheated to boiling with continued stirring to gelatinise the starch or dissolve the gelling agent. Alternatively, the dry mix is blended with sufficient cold milk or water to form a slurry and this slurry is added with stirring into milk which has been brought to the boil, then removed from the heat. This mixture is further heated to boiling with continued stirring to gelatinise the starch or dissolve the gelling agent.

In yet another preparation method, the dry mixture is added to cold milk and heated with continuous stirring until boiling to gelatinise the starch or dissolve the gelling agent. On cooling the mixture sets to a gel.

These preparation methods are time consuming and care must be taken to avoid the formation of lumps. Care is also required to avoid burning of the thickened milk composition during cooking.

Compositions are also available to the housewife by use of which the above process is considerably simplified. An example of such compositions is a mixture of a sweetener, a natural or modified starch and a thickening agent consisting of a vegetable gum and carrageenan gum. This composition is capable of being added in powder form by the housewife directly to boiling milk to produce a lump free product which on cooling sets to a firm, smooth textured gel.

DE-A-3123972 discloses liquid compositions which may be used to prepare alcohol-containing milk pudding products.

EP-A-0018153 relates to gelling systems for use in the preparation of gelled food products. The gelled phase comprises a mixture or a reaction product of at least one glucomannan and at least one carrageenan.

US-A-3619209 teaches pudding mix compositions which contain lipid esters. The use of lipid esters is claimed to decrease the need for stirring the hot mixture and to reduce the tendency of the pudding to scorch and stick to the pan.

The popularity of milk based gelled puddings is such that there is a demand for them by catering concerns, for example for use in restaurants and institutions such as hospitals and schools. Production of such puddings on a catering scale involves preparation of batches far larger than on the domestic scale. The catering market also places different quality and performance demands on milk based puddings than on those designed for domestic use. It is, for instance, preferable to have a product which has a relatively low viscosity in the warm state to facilitate portioning of the hot pudding; to reduce the tendency of the hot mixture to scorch or burn onto the surface of the preparation vessel; and to simplify cleaning of the preparation vessel. The final pudding should preferably have a smooth creamy texture. It should also be easy to remove from moulds and be capable of being sliced and portioned easily.

It is also important that the pudding is not subject to syneresis, especially after having been cut. Syneresis is a phenomenon in which the gel tends to shrink and cause a liquid phase to separate. Puddings made in the catering business must have storage stability since they may be prepared long before use and when sliced, unused slices or portions may have to be stored for some time. Syneresis detracts from this necessary storage stability.

It is in the production of such large sized batches to meet the requirements of the catering market that problems have been met with the compositions described above.

One problem is the formation of lumps caused by the difficulty in adequately dispersing the pudding mix in large sized batches. Another problem takes the form of curdling of the milk used to reconstitute the dry food composition and after investigation we have discovered that curdling occurs as a result of the heat retention by the mass of material in a large batch.

The effect of the retained heat is to subject the composition to an elevated temperature for far longer than is customary when the equivalent composition is used on a domestic scale. We have also found that curdling is likely to occur with batches of two litres or more and as batches of 10 litres or greater are customary on the catering scale, it is clear that the compositions currently available on the retail market are not satisfactory for the catering business.

It is essential for the milk to which the dry food composition is added to be boiling or near to boiling because the starch has to gelatinise to be effective and for gelatinisation a temperature of 80°C or higher is required. It is also difficult for the rate of cooling of a large batch to be increased since large volumes are more difficult to manipulate. We have now devised however a dry food composition which is capable of being used on a catering scale, eg. to produce a batch of milk based pudding of two litres volume or more which has a viscosity suitable for pouring and which has a reduced tendency to burn on the container on continued heating. This pudding does not curdle when subjected to elevated temperatures for longer than is customary, can be readily removed from moulds, has a smooth creamy texture and can be readily cut and portioned.

According to the invention a dry food composition for forming a milk based pudding comprises:
30 to 70 parts by weight sweetening agent,
up to 25 parts by weight of natural or modified starch
0.5 to 4 parts by weight carrageenan gum
0.5 to 3 parts by weight of one or more pectins
0.3 to 3 parts by weight of another gum selected from the group consisting of plant seed gums, microbial gums, and cellulose gums
and, optionally, one or more flavouring or colouring agents, the composition being capable of being added directly to boiling milk without forming lumps or causing the milk to curdle and being capable on cooling of setting to a firm storage stable gel.

Preferably the other gum is xanthan gum.

The natural or modified starch which is used in the composition according to the invention may be any starch conventionally used in pudding manufacture. For example, as a natural starch there may be used corn (maize) starch or tapioca starch while examples of modified starches include a phosphate cross-bonded waxy corn starch and starches cross-bonded with adipic acid.

The sweetening agent component of the composition according to the invention may be any sweetener conventionally used in commercial dessert formulations eg sucrose, fructose, glucose, a corn syrup, a hydrogenated corn syrup or combinations of these sweeteners. Artificial sweeteners such as saccharine may also form part of this component of the composition.

A wide range of flavouring agents may be optional components of the composition according to the invention eg vanilla, caramel, rum, coffee, chocolate or fruit flavours. Suitable colouring agents may be any such product acceptable under the relevant food law. Typically, a flavouring agent may comprise 0.1 to 10% by weight of the composition and a colouring agent 0.001 to 0.1%.

Preferably, the proportions of the constituents of the composition according to the invention may suitably be as follows:
40 to 70 parts by weight sweetening agent
1 to 10 parts by weight starch
1 to 3 parts by weight carrageenan gum
0.5 to 2 parts by weight pectin(s)
0.3 to 1.5 parts by weight other gum.

Proportions may be chosen from the ranges given above taking into account the following considerations as well as personal factors such as the desired texture and mouthfeel:
a) The sweetening agent and its quantity are chosen to suit the taste of the potential consumer. It is advisable not to use too crystalline a sugar since this form favours lump formation in the reconstituted pudding.
b) Starch is a component which has a beneficial effect on the texture of the product making it creamy. Too much starch however increases the tendency to lump formation in the reconstituted pudding and gives a gel which is difficult to cut and release from its mould. Starch also reduces the tendency to syneresis.
c) Carrageenan (or seaweed) gum improves the ability of a moulded pudding to be separated from the mould but in increasing quantities it tends to produce a brittle gel exhibiting syneresis.
d) Pectins have the desirable property of reducing syneresis but in increasing amounts they are, we have found, the main cause of curdling.
e) The presence of the plant seed gum eg locust bean gum, microbial gum eg xanthan gum, or cellulose gum eg methylcellulose gum, is important to prevent curdling but too much can give the reconstituted product a bad mouth feel eg an unwanted stickiness.

One dry food composition which we have found to be particularly satisfactory has the following proportions of constituents:
50 parts by weight sweetening agent
5.5 parts by weight starch
2.2 parts by weight carrageenan gum
1.1 parts by weight pectin
0.5 to 1.0 parts by weight xanthan gum
The dry food compositions according to the invention are capable of being reconstituted with milk or with a milk derivative which is capable of curdling. The milk may be high fat (eg. about 3.8% fat by weight) or low fat (eg. about 1.5% fat by weight) and may be homogenised, unhomogenised, pasteurised or sterilised. The action necessary for reconstitution is to heat the milk to boiling (92 - 95°C), add the composition and stir for a short time eg. up to about five minutes and then portion or pour into moulds and allow to cool and set.

The following tests 1 to 16 were carried out and exemplify the investigations which preceded the invention of the compositions now claimed.

In the tests two litres of high fat milk (3.5 weight% fat) were heated to boiling in a pan and the test powder added and stirred for two minutes while boiling continued. The liquid was then poured into a two litre rectangular mould.

The results of a number of tests are given in the Table. In every case the composition contained 50 grams finely milled sucrose, 5.5 grams of a phosphate cross-bonded waxy corn starch and the gum components and their amounts in grams as shown.

| Test | Carrageenan gum | Pectin | Gelatin | Starch* | Xanthan gum | Result |
|---|---|---|---|---|---|---|
| 1 | 1.55 | 1.40 | - | - | - | curdled and unable to be moulded |
| 2 | 1.55 | 1.40 | 0.5 | - | - | curdled |
| 3 | 1.55 | 1.40 | 1.0 | - | - | curdled, showed syneresis and was difficult to demould |
| 4 | 1.30 | 1.70 | - | - | - | curdled |
| 5 | 1.30 | 1.70 | 0.5 | - | - | curdled |
| 6 | 1.30 | 1.70 | 1.0 | - | - | curdled |
| 7 | 1.60 | 1.10 | - | - | - | curdled |
| 8 | 1.60 | 1.10 | 0.5 | - | - | curdled |
| 9 | 1.60 | 1.10 | 1.5 | - | - | curdled |
| 10 | 2.00 | 1.10 | - | - | - | curdled |
| 11 | 2.50 | 1.10 | - | - | - | curdled |
| 12 | 2.00 | 0.50 | - | - | - | curdled |
| 13 | 1.00 | 0.50 | - | - | - | curdled |
| 14 | 3.00 | - | - | 4.0 | - | curdled and lumpy |
| 15 | 2.10 | 1.10 | - | - | - | Syneresis |
| 16 | 2.10 | 1.10 | 0.5 | - | - | curdled |
| 17 | 2.20 | 1.10 | - | - | 0.5 | no curdling |
| | | | | | | no syneresis |
| 18 | 2.20 | 1.10 | - | - | 1.0 | no curdling |
| | | | | | | no synerisis |

| | | | | | | |
|---|---|---|---|---|---|---|
| * Phosphate cross-bonded waxy corn starch in addition to that already present. | | | | | | |

The product tested in Tests 17 and 18 was characterised by producing a lump-free liquid composition which showed no curdling and was capable of being poured or portioned while hot and which produced a gel which was firm and could be cut easily and which was storage stable showing no syneresis. The final pudding also possessed a smooth, creamy texture.

## Claims

1. A dry food composition for forming a milk based pudding comprises:
30 to 70 parts by weight sweetening agent,
up to 25 parts by weight of natural or modified starch
0.5 to 4 parts by weight carrageenan gum
0.5 to 3 parts by weight of one or more pectins
0.3 to 3 parts by weight of another gum selected from the group consisting of plant seed gums, microbial gums, and cellulose gums,
and, optionally, one or more flavouring or colouring agents, the composition being capable of being added directly to boiling milk without forming lumps or causing the milk to curdle and being capable on cooling of setting to a firm storage stable gel.

2. A dry food composition according to claim 1 characterised in that the other gum is xanthan gum.

3. A dry food composition according to claim 1 characterised in that it comprises:
40 to 70 parts by weight sweetening agent
1 to 10 parts by weight starch
1 to 3 parts by weight carrageenan gum
0.5 to 2 parts by weight pectin(s)
0.3 to 1.5 parts by weight other gum

4. A dry food composition according to claim 3 characterised in that it comprises:
50 parts by weight sweetening agent
5.5 parts by weight starch
2.2 parts by weight carrageenan gum
1.1 parts by weight pectin
0.5 to 1.0 parts by weight xanthan gum

5. A dry food composition according to any one of the preceding claims characterized in that the starch is a phosphate cross-bonded corn starch.

6. A dry food composition according to any one of the preceding claims characterized in that the sweetening agent comprises sucrose, fructose, glucose, a corn syrup, a hydrogenated corn syrup, an artificial sweetener such as saccharine or combinations of these sweetening agents.

7. A dry food composition according to any one of the preceding claims characterized in that it contains as flavouring agent 0.1 to 10% by weight of vanilla, caramel, rum, coffee, chocolate or a fruit flavour.

8. A process for the production of a pudding characterized in that a composition according to any one of the preceding claims is added directly to boiling milk or a milk derivative which is capable of curdling, the mixture stirred for up to 5 minutes and then either portioned or poured into a mould or moulds and allowed to cool and set.

9. A process according to claim 8 in which the composition is added to ten litres or more of boiling milk or milk derivative.

## Patentansprüche

1. Trockene Nahrungsmittelzusammensetzung zur Bildung eines Puddings auf Milchbasis, umfassend
30 bis 70 Gewichtsteile Süßungsmittel,
bis zu 25 Gewichtsteile natürlicher oder modifizierter Stärke,
0,5 bis 4 Gewichtsteil(e) Carrageenangummi,
0,5 bis 3 Gewichtsteil(e) eines oder mehrerer Pektins (Pektine),
0,3 bis 3 Gewichtsteil(e) eines Weiteren aus der Gruppe Pflanzensaatgummisorten, mikrobielle Gummisorten und Cellulosegummisorten ausgewählten Gummis
und gegebenenfalls ein oder mehr Geschmackstoff(e) oder Färbemittel, wobei die Zusammensetzung direkt in kochende Milch ohne Klumpenbildung oder Bewirken einer Gerinnung der Milch eingetragen und beim Abkühlen zu einem festen lagerstabilen Gel verfestigt werden kann.

2. Trockene Nahrungsmittelzusammensetzung nach Anspruch 1, dadurch gekennzeichnet, daß es sich bei dem weiteren Gummi um Xathangummi handelt.

3. Trockene Nahrungsmittelzusammensetzung gemäß Anspruch 1, dadurch gekennzeichnet, daß sie
40 bis 70 Gewichtsteile Süßungsmittel,
1 bis 10 Gewichtsteil(e) Stärke,
1 bis 3 Gewichtsteil(e) Carrageenangummi,
0,5 bis 2 Gewichtsteil(e) Pektin(e) und
0,3 bis 1,5 Gewichtsteil(e) weiterer Gummi
umfaßt.

4. Trockene Nahrungsmittelzusammensetzung nach Anspruch 3, dadurch gekennzeichnet, daß sie
50 Gewichtsteile Süßungsmittel,
5,5 Gewichtsteile Stärke,
2,2 Gewichtsteile Carrageenangummi,
1,1 Gewichtsteile Pektin und
0,5 bis 1,0 Gewichtsteile Xanthangummi,
umfaßt.

5. Trockene Nahrungsmittelzusammensetzung nach einem der vorherigen Ansprüche, dadurch gekennzeichnet, daß es sich bei der Stärke um eine durch Phosphat querverknüpfte Maisstärke handelt.

6. Trockene Nahrungsmittelzusammensetzung nach einem der vorherigen Ansprüche, dadurch gekennzeichnet, daß das Süßungsmittel Saccharose, Fructose, Glucose, einen Maissirup, einen hydrierten Maissirup, ein künstliches Süßungsmittel, beispielsweise Saccharin, oder Kombinationen aus diesen Süßungsmitteln umfaßt.

7. Trockene Nahrungsmittelzusammensetzung nach einem der vorherigen Ansprüche, dadurch gekennzeichnet, daß sie als Geschmackstoff 0,1 bis 10 Gew.-Teil(e) Vanille, Karamel, Rum, Kaffee, Schokolade oder einen Fruchtgeschmacksstoff enthält.

8. Verfahren zur Herstellung eines Puddings, dadurch gekennzeichnet, daß eine Zusammensetzung nach einem der vorhergehenden Ansprüche direkt in kochende Milch oder ein zum Gerinnen fähiges Milchderivat eingetragen wird, das Gemisch bis zu 5 min gerührt wird und anschließend entweder in eine Form oder Formen portioniert oder gegossen und Abkühlen und Verfestigen gelassen wird.

9. Verfahren nach Anspruch 8, bei dem die Zusammensetzung zu 10 Litern oder mehr kochender Milch oder eines Milchderivats gegeben wird.

## Revendications

1. Composition alimentaire sèche destinée à la formation d'un entremets à base de lait, comprenant :
30 à 70 parties en poids d'un agent édulcorant,
jusqu'à 25 parties en poids d'amidon naturel ou modifié,
0,5 à 4 parties en poids de carraghénine,
0,5 à 3 parties en poids d'une ou plusieurs pectines,
0,3 à 3 parties en poids d'une autre gomme choisie dans le groupe comprenant des gommes de graines végétales, des gommes de micro-organismes et des gommes de cellulose,
et, facultativement, un ou plusieurs agents aromatisants ou colorants, la composition pouvant être ajoutée directement à du lait à l'ébullition sans former de grumeaux ou provoquer la coagulation du lait et étant capable par refroidissement de prendre en un gel ferme stable à l'entreposage.

2. Composition alimentaire sèche suivant la revendication 1, caractérisée en ce que l'autre gomme est la gomme xanthane.

3. Composition alimentaire sèche suivant la revendication 1, caractérisée en ce qu'elle comprend :
40 à 70 parties en poids d'une agent édulcorant,
1 à 10 parties en poids d'amidon,
1 à 3 parties en poids de carraghénine,
0,5 à 2 parties en poids d'une ou plusieurs pectines,
0,3 à 1,5 partie en poids d'une autre gomme.

4. Composition alimentaire sèche suivant la revendication 3, caractérisée en ce qu'elle comprend :
50 parties en poids d'un agent édulcorant,
5,5 parties en poids d'amidon,
2,2 parties en poids de carraghénine,
1,1 partie en poids de pectine,
0,5 à 1,0 partie en poids de gomme xanthane.

5. Composition alimentaire sèche suivant l'une quelconque des revendications précédentes, caractérisée en ce que l'amidon est un amidon de maïs réticulé avec un phosphate.

6. Composition alimentaire sèche suivant l'une quelconque des revendications précédentes, caractérisée en ce que l'agent édulcorant comprend le saccharose, le fructose, le glucose, un sirop de glucose, un sirop de glucose hydrogéné, un édulcorant synthétique tel que la saccharine ou des associations de ces agents édulcorants.

7. Composition alimentaire sèche suivant l'une quelconque des revendications précédentes, caractérisée en ce qu'elle contient comme agent aromatisant 0,1 à 10 % en poids de vanille, de caramel, de rhum, de café, de chocolat ou d'un arôme de fruit.

8. Procédé de production d'un entremets, caractérisé en ce qu'on ajoute une composition suivant l'une quelconque des revendications précédentes directement à du lait ou un dérivé de lait à l'ébullition qui est capable de coaguler, on agite le mélange pendant un temps allant jusqu'à 5 minutes, puis on le répartit par portions ou on le verse dans un ou plusieurs moules et on le laisse refroidir et prendre.

9. Procédé suivant la revendication 8, dans lequel la composition est ajoutée à un volume égal ou supérieur à 10 litres de lait ou dérivé de lait à l'ébullition.
